# EUROPEAN PATENT SPECIFICATION

(11) **EP 4 398 715 B1**
(45) Date of publication and mention of the grant of the patent: **03.09.2025**
(21) Application number: 22753881.6
(22) Date of filing: 19.07.2022
(51) Int. Cl.: A01K 41/00, A01K 45/00

(54) **METHOD FOR USING CARBON DIOXIDE IN POULTRY EGG INCUBATION TO IMPROVE CHARACTERISTICS OF POULTRY**
VERFAHREN ZUR VERWENDUNG VON KOHLENDIOXID BEI DER BEBRÜTUNG VON GEFLÜGELEIERN ZUR VERBESSERUNG DER EIGENSCHAFTEN VON GEFLÜGELTIEREN
MÉTHODE D'UTILISATION DU DIOXYDE DE CARBONE DANS L'INCUBATION DES OEUFS DE VOLAILLE POUR AMÉLIORER LES CARACTÉRISTIQUES DE LA VOLAILLE

(30) Priority: 08.09.2021 US 202163241666 P
(43) Date of publication of application: 17.07.2024
(73) Proprietor: Praxair Technology, Inc., Danbury, CT 06810 (US)
(72) Inventor: ISRANI, Sameer, H., Darien, IL 60561 (US); HUNEK, Balazs, Western Springs, IL 60558 (US)
(74) Representative: Schwan Schorer & Partner mbB
(86) International application number: PCT/US2022/037555
(87) International publication number: WO 2023/038717

(56) References cited:
- RU-C1- 2 649 346
- US-A- 3 848 569
- US-A1- 2007 245 973

## Description

### Field of the Invention

The present invention relates to treatment of embryonic chickens as eggs in an incubator, to improve the characteristics of the chicken upon hatching of the egg and thereafter as the chick grows to an adult grown chicken. The characteristics that may be improved include increased hatchability of the egg; increased hatch weight of the chicken; increased viability and decreased mortality of the chicken; increased weight gain of the growing chicken; increased final weight; and reduced or eliminated incidence of a condition known as Woody Breast in the hatched, grown chicken.

### Background of the Invention

A large proportion of modern chickens that are grown to be sources of their meat to be consumed, especially the ones grown in the US, are grown to relatively large sizes (heavier than 2,7 kg (6 pounds)). The large size is believed to be desirable as it provides breast meat in relatively large quantities per chicken. Chickens grown for their meat are called "broilers". Chickens grown to larger sizes (heavier than 2,7 kg (6 pounds)) for their meat are sometimes referred to as "big birds".

However, chickens of these large sizes, especially heavier than 2,7 kg (6 pounds), are often found to have a condition called "Woody Breast" or "Wooden Breast" (referred to herein as Woody Breast or WB). In this condition the breast muscles (which provide the breast meat) have a very hard texture and lower nutritional value. These characteristics substantially reduce the value of the breast meat. It has been estimated that on average 5-20% of big birds (2,7 kg (6 pounds) or more in weight at the time of slaughter) suffer from Woody Breast, resulting in undesirable overall losses to the chicken growers. Woody Breast is exhibited in the live chicken, before any processing or cooking of the chicken for its meat, and is not prevented or reduced by any processing or cooking of the breast meat. There is no known solution for treating or avoiding Woody Breast condition, other than reducing the size to which the chickens are grown, which itself would reduce their overall value.

The hatchability of the egg is an important characteristic, in that it relates to the ability of a live, healthy chick to emerge from the egg in which it had been developing as an embryo. The hatch weight (that is, the weight of the chick at the time that it hatches) is important in that it relates to the ability of the chick to survive and grow to adult size. The increased weight gain (tendency to gain weight) as the chicken grows is significant because it indicates the total meat that will be harvested and can be sold. Mortality is important in that it indicates a higher likelihood that the chicken will reach adult size and will be in good health when it reaches its adult size.

RU2649346 C1 and US2007245973 A1 disclose methods and devices for incubating poultry eggs to hatching in an environment enriched with CO2.

### Brief Summary of the Invention

The present invention identifies specific treatment regimens applying carbon dioxide (CO₂) concentrations and regimens (or "recipes") to unhatched fertilized embryonic poultry eggs while they are being incubated, that in the case of chicken eggs have been found to be successful in reducing Woody Breast in chickens hatched from the treated eggs, and in promoting the other characteristics mentioned herein (namely increased hatchability of the egg; increased hatch weight of the chicken; increased viability and decreased mortality of the chicken; and increased weight gain of the growing chicken). These effects have been found with the regimens described herein of established CO₂ concentrations in the incubator for established periods of time. These regimens are all practically and safely implementable in commercial hatcheries, without causing any other harmful side effects such as reduced hatchability, increased mortality, or other disease conditions, to the hatched chickens.

The present invention can be characterized as a method of incubating a fertilized unhatched chicken or other poultry egg to hatching, comprising incubating the egg for an incubation period of 18 to 21 consecutive days in a gaseous atmosphere which is in contact with the egg, and during that time, injecting carbon dioxide from a source outside the egg into the gaseous atmosphere as necessary so that for at least one period of time (or, alternatively, at least six periods of time) of at least 12 hours (or, alternatively, of at least 24 hours) the carbon dioxide concentration in the gaseous atmosphere which is in contact with the egg is 7,500 ppm to 20,000 ppm.

The inventors have identified several regimens, including the following:
Regimen 1: The fertilized unhatched chicken or other poultry egg is exposed for at least one day, preferably at least 6 days, and more preferably at least 12 days of the first 18 days of the incubation period to a gaseous atmosphere which is in contact with the egg and which contains carbon dioxide at an incubation concentration that is within 10%, and preferably within 5%, of a set value between 7,500 ppm CO₂ and 20,000 ppm CO₂, and during the 18-day period feeding carbon dioxide into the atmosphere as necessary to maintain the CO₂ concentration in which the egg is incubated at said incubation concentration, and then for 3 consecutive days immediately following the 18-day period incubating the egg in an atmosphere into which no additional CO₂ is fed from any source outside the egg or into which CO₂ is fed from a source outside the egg as necessary to maintain the CO₂ concentration of the atmosphere in contact with the egg at a concentration that is within 10%, and preferably within 5%, of a set value between 7,500 ppm CO₂ and 20,000 ppm CO₂.

In a preferred embodiment of this Regimen 1, the set value throughout the first 18 days is constant for all 18 days.

Regimen 2: In a second preferred regimen, the fertilized unhatched chicken or other poultry egg is exposed to a gaseous atmosphere which is in contact with the egg for consecutive incremental periods in each of which incremental periods the carbon dioxide concentration in the gaseous atmosphere is maintained at a value that is within 10%, and preferably within 5%, of a set value that is constant throughout the incremental period and is between the CO₂ concentration of the ambient atmosphere (which is considered to be on the order of 350 ppm to as high as 420 ppm CO₂) and 20,000 ppm CO₂ by feeding carbon dioxide into the gaseous atmosphere from a source outside the egg as necessary to maintain the CO₂ concentration in the gaseous atmosphere within 10%, and preferably within 5%, of said set value, wherein the set values and the CO₂ concentrations in the gaseous atmosphere increase from each of said incremental periods to the next incremental period, such that in the last incremental period the CO₂ concentration in the gaseous atmosphere is within 10%, and preferably within 5%, of a value between 7,500 ppm CO₂ and 20,000 ppm CO₂, and then for 3 consecutive days immediately following the first 18 days of the incubation period incubating the egg in an atmosphere into which no additional CO₂ is fed from any source outside the egg or into which CO₂ is fed from a source outside the egg as necessary to maintain the CO₂ concentration of the atmosphere in contact with the egg at a concentration that is within 10%, and preferably within 5%, of a constant set value between 7,500 ppm CO₂ and 20,000 ppm CO₂.

In a preferred embodiment of Regimen 2, each set value increases from one incremental period to the next incremental period linearly, that is, by equal increments.

Regimen 3: A third preferred regimen comprises, throughout the incubation period, alternatingly
(A) exposing the fertilized unhatched chicken or other poultry egg to a gaseous atmosphere which is in contact with the egg for an exposure period, in each of which exposure periods the carbon dioxide concentration in the gaseous atmosphere is maintained at a value that is within 10%, and preferably within 5%, of a set value between 7,500 ppm CO₂ and 20,000 ppm CO₂ that is constant in each exposure period, by feeding carbon dioxide into the gaseous atmosphere from a source outside the egg as necessary to maintain the CO₂ concentration in the gaseous atmosphere in the exposure period within 10%, and preferably within 5%, of said set value, wherein the set value is the same in all of the exposure periods, and
(B) exposing the fertilized unhatched egg for an intervening period to a gaseous atmosphere into which no carbon dioxide is fed into the gaseous atmosphere from outside the egg.

In preferred aspects of this regimen, each exposure period is 18 to 24 hours in duration and each intervening period is 18 to 24 hours in duration; and there are 2 to 20 exposure periods and 2 to 20 intervening periods.

Regimen 4: A fourth preferred regimen comprises, throughout the incubation period, alternatingly
(A) exposing the fertilized unhatched chicken or other poultry egg to a gaseous atmosphere which is in contact with the egg for an exposure period, in each of which exposure periods the carbon dioxide concentration in the gaseous atmosphere is maintained at a value that is within 10%, and preferably within 5%, of a set value between the CO₂ concentration of the ambient atmosphere and 20,000 ppm CO₂ that increases from one exposure period to the next exposure period, by feeding carbon dioxide into the gaseous atmosphere from a source outside the egg as necessary to maintain the CO₂ concentration in the gaseous atmosphere in the exposure period within 10%, and preferably within 5%, of said set value, such that in the last incremental period the CO₂ concentration in the gaseous atmosphere is within 10%, and preferably within 5%, of a value between 7,500 ppm CO₂ and 20,000 ppm CO₂ and
(B) exposing the fertilized unhatched egg for an intervening period to a gaseous atmosphere into which no carbon dioxide is fed into the gaseous atmosphere from outside the egg.

In preferred aspects of this fourth regimen, each exposure period is 18 to 24 hours in duration and each intervening period is 18 to 24 hours in duration.

As used throughout this description and the claims herein, "ppm" means parts per million on a weight basis.

As used throughout this description and the claims herein, the term "ambient atmosphere" means the atmosphere in the region inside and immediately outside the incubator.

As used throughout this description and the claims herein, the term "as necessary" means that carbon dioxide is added if the CO₂ concentration of the atmosphere into which the CO₂ is to be added is below a desired range or level, and that no CO₂ is added if the CO₂ concentration in the atmosphere is at a level that is within the desired range or is at a desired level.

As used throughout this description and the claims herein, "carbon dioxide from a source outside the egg" excludes carbon dioxide that has entered the incubator from the natural atmosphere outside the incubator and excludes carbon dioxide that has passed out of the egg through the shell of the egg from inside the egg.

As used throughout this description and the claims herein, "relative humidity" of air or gas refers to the amount of water vapor currently present in the air or gas as percentage of maximum amount of water vapor that the air or gas can hold (without causing precipitation) at the given air or gas temperature. When maximum water vapor capacity of the air or gas, at the given temperature, is reached or exceeded, i.e. when relative humidity reaches 100%, water vapor will precipitate out as liquid water. Many different devices are easily available and used by those skilled in the art to measure relative humidity in the air or gas.

As used throughout this description and the claims herein, the term "incubation" refers to the period when fertilized eggs are placed in a controlled atmosphere environment which is warm enough to promote embryo growth and development. Typically, in commercial hatcheries, the first 18 days of incubation take place in a room or equipment that is referred to as either the setter or the incubator and the process is usually referred to as setting. Then the developed eggs are transferred to a separate room or equipment called the hatcher and the process is usually referred to as hatching. As used throughout this description and the claims herein, the term "incubation" refers to the combination of the setting and hatching phases.

In most commercial chicken hatcheries, the setting period is usually 18 days and the hatching period is usually 3 days. In some cases, these periods can be different. The present invention also applies if the setting and hatching periods are different than what is described throughout this description and the claims herein. For example, if the total period is 25 days rather than 21 days, the present invention would still apply. In this case, either by feeding carbon dioxide into the gaseous atmosphere from a source outside the egg for 18 days or even extending the period proportionally to 22 days.

The present invention can also apply for incubation of poultry species other than chicken. As used herein, "poultry" means chicken, turkey, duck, and goose. For example, the present invention would also apply to turkey egg incubation. Typically, turkey egg incubation periods are longer than chicken egg incubation periods. As in the previous paragraph the CO₂ regimens described in this invention can be kept the same or the time periods can be extended proportionally.

The present invention provides methods, recipes and equipment for the incubation under controlled CO₂ concentrations of unhatched fertilized embryonic eggs of chickens to increase the respiratory and vascular system development and respiratory and vascular function of the chickens before and after hatching, with all other incubation conditions and controls being comparable. In commercial incubating methods and equipment that do not practice the present invention, the CO₂ concentration evolves in an uncontrolled and varying fashion naturally or by happenstance due to limiting otherwise conditioned air circulation in the incubator. The present invention discovered the criticality of controlling the CO₂ concentration and specific regimens of concentration and timing in the incubator atmosphere to hatch and grow healthy chickens exhibiting reduced, or no, incidence of Woody Breast, and exhibiting the other characteristics mentioned herein (increased hatchability; increased hatch weight; increased viability and decreased mortality; and increased weight gain).

### Brief Summary of the Drawings

Figure 1 is a plan view of an incubator and associated apparatus with which the present invention can be practiced.
Figures 2A, 2B, 2C, and 2D are graphs illustrating several different regimens for establishing CO₂ atmospheres in the incubator.
Figure 3A is a bar graph of Woody Breast Scores for an example of regimen 1. Figures 3B, 3C, 3D, 3E are corresponding results for hatchability, hatch weight, final weight and livability of the birds subjected to regimen 1 compared to control birds.
Figure 4A is a bar graph of Woody Breast Scores for an example of regimen 2. Figures 4B, 4C, 4D, 4E are corresponding results for hatchability, hatch weight, final weight and livability of the birds subjected to regimen 2 compared to control birds.
Figure 5A is a bar graph of Woody Breast Scores for an example of regimen 3. Figures 5B, 5C, 5D, 5E are corresponding results for hatchability, hatch weight, final weight and livability of the birds subjected to regimen 3 compared to control birds.

### Detailed Description of the Invention

The aspects of the present invention that involve incubation in atmospheres that contain carbon dioxide are advantageously carried out with any fertilized chicken eggs and especially with fertilized eggs that are expected, upon hatching, to produce chickens that are capable with appropriate care and feeding to grow into chickens exhibiting weight of at least 2,7 kg (6 pounds), preferably at least 3 kg (6,5 pounds), and even at least 3,6 or 4,5 kg (8 or 10 pounds), by 42 to 58 days after hatching.
Such eggs are preferably obtained from chickens that are genetically favored to produce eggs which will hatch to produce chickens of such sizes.

The aspects of this invention that involve incubation under specific conditions in atmospheres that contain carbon dioxide, can be carried out in an incubator that is largely of conventional design and features, and that is provided with the capability of feeding carbon dioxide into the incubator, and with the capability of measuring the concentration of carbon dioxide in the atmosphere within the incubator and of initiating and discontinuing the feeding of carbon dioxide into the incubator in response to measured values of the concentration of carbon dioxide within the incubator.

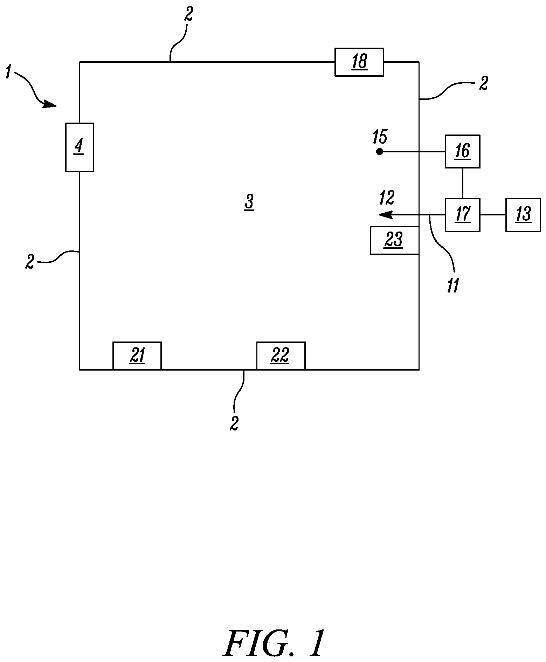

For example, referring to Figure 1, an incubator useful in the practice of this invention comprises a structure 1 that houses an enclosed space 3 that is defined by walls 2 and by a floor (not shown) and a ceiling (not shown) which are sealed to the walls, and that contains at least one entry 4 through which persons and trolleys or racks with eggs can pass into and out of space 3 to place eggs in the incubator and to remove eggs or hatched chicks out of the incubator. The vertical distance from floor to ceiling is typically on the order of six feet or more in larger structures typically used by commercial scale producers, which enable persons to stand inside the incubator, but smaller structures can be used too. Typically, the walls are insulated, and usually the floor and ceiling are also insulated, to help hold heat within space 3 in aid of the incubation of eggs within the incubator.

Gas line 11 ending at outlet 12 inside space 3 conveys gaseous carbon dioxide or a gas composition that contains carbon dioxide through controllable valve 17 from gas source 13 which can be a storage tank, cylinder, vessel or container, or a delivery truck, which contains carbon dioxide at a delivery concentration that is typically at least 80 vol.% CO₂. One or more probe(s) 15 measures the carbon dioxide concentration inside space 3. Monitor 16 controls the opening and closing of valve 17 in line 11 in response to the values measured by probe 15, by comparing the measured concentration values to preprogrammed values in monitor 16 of the concentration of CO₂ that is to be maintained in space 3. When the measured value of the carbon dioxide concentration is below a predetermined desired value stored in the monitor 16, the monitor opens valve 17 so that carbon dioxide is fed into space 3 until the measured value of the CO₂ concentration in the gaseous atmosphere in space 3 has increased to the desired value. Carbon dioxide can be fed by any of numerous ways, including (but not limited to) feeding a gaseous stream of 100% carbon dioxide, or feeding a gaseous stream that is a combination (mixture) of carbon dioxide together with one or more other gaseous substances, or feeding liquid or solid carbon dioxide, or adding a substance that can generate or release carbon dioxide into the gaseous atmosphere. When the measured carbon dioxide concentration in space 3 reaches the desired value, as detected by probe 15 and monitor 16, monitor 16 closes valve 17. Exhaust port 18 represents any suitable opening, openable and closable on demand, through which atmosphere can be vented out of space 3. The incubator should preferably also include equipment that provides the ability to measure the amounts of fresh or conditioned air (from outside the incubator) flowing into the incubator, and/or the flow rate at which the atmosphere within the incubator leaves the incubator. This measurement can then be used to determine the flow rate of CO₂ feeding required to maintain a certain concentration of CO₂.

To lower the CO₂ concentration in the atmosphere to which the egg is exposed in the incubator, one can feed air, or oxygen and/or nitrogen, into the atmosphere while removing atmosphere from the interior of the incubator, whereby the amount of CO₂ in the atmosphere relative to other gaseous components present is lowered.

The incubator is also equipped with air or gas temperature control (which can be either or both of a heater, and/or cooler such as an air conditioner unit 21 and with a source 22 of water vapor such as a steam line or an evaporator, all of which are known and conventionally available, and each of which are equipped with suitable controls to activate and deactivate the supply of heat, cooling and of humidity, respectively, so as to controllably maintain the atmosphere in space 3 at desired values of temperature and relative humidity. The incubator typically comprises a number of racks on which the eggs to be incubated are placed.

Most commercial incubators contain an internal fan 23 that distributes or mixes the air inside the incubator, ensuring uniform temperature and humidity conditions. Location of carbon dioxide gas outlet 12 within the incubator is important relative to the location of the fan to ensure uniform distribution of the fed CO₂ gas. Outlet 12 of the carbon dioxide gas line can be composed of either a single point or injection nozzle or alternatively it can be composed of multiple nozzles or points of injection. It is important to locate the outlet 12 close to the fan 23. A preferred configuration is a ring of nozzles that inject CO₂ gas very close to the internal fan inside the incubator, either right upstream or downstream of the fan 21. Preferably the outlet 12 ring of nozzles has a diameter matching the diameter of the fan blades and located 2 to 12 inches, either upstream or downstream, from the fan.

The position of probe 15 is also important to ensure uniform and accurate distribution of the fed CO₂ gas. Preferably the probe 15 is located at least the distance of half the incubator width away from outlet 12. Also the probe 15 should be located at the center of one of the egg racks, most preferably only 1 to 3 inches away from the surface of the eggs at the center of the rack. All of this ensures that the probe 15 is measuring the right CO₂ environment within the incubator and is not producing false readings. A multitude of CO₂ probes can be used for large incubation chambers, or for chambers with inadequate gas mixing. Average reading or some other means of utilizing spatially distributed CO₂ readings can be used to control CO₂ addition in these cases.

In operation, the gaseous atmosphere in the incubator should also include at least 17 vol.% oxygen, more preferably more than 19% and most preferably more than 20 vol.% oxygen concentration

These components, and the amounts of each component, can be provided in the incubator by known techniques of adding and measuring the desired components of the overall gaseous atmosphere.

The temperature of the gaseous atmosphere in which the eggs are incubated should be in the range of 92⁰F to 103°F. The relative humidity level in the gaseous atmosphere should be 30% to 70% relative humidity.

Eggs being incubated need a warm (typically 100⁰F) temperature and controlled humidity for optimum growth. However, the eggs themselves generate heat and expel moisture and generate carbon dioxide during the incubation process. The amounts of heat, moisture and carbon dioxide put out by the fertilized eggs (or developing embryos) vary throughout the incubation process and can also be different from one genetic strain to another. Thus, the ability to control the amount of fresh air that is allowed to enter the incubator (accompanied by the same amount of air from within the incubator that exits it) varies depending on the strain of the birds, number of eggs inside the incubator and time during the incubation process.

Some previous studies restricted the fresh air exchanges into the incubator (non-ventilation) to increase the amount of carbon dioxide inside the incubator to approximately 7,000 ppm. This is an available method to increase the carbon dioxide levels inside the incubator. This method can be practiced by completely turning off the fresh air exchanges or modulating the fresh air exchanges based on incubator carbon dioxide concentration. However, this non-ventilation method, does not allow the operator to simultaneously control the carbon dioxide levels while also independently controlling the temperature and humidity, which can lead to negative effects on the hatchability of the eggs, mortality of the resulting chicken, disease incidences, low weight gain, higher food consumption etc. In most commercial incubators, more importance is given to controlling temperature and humidity levels inside the incubator. This results in a variable and uncontrolled carbon dioxide level during the incubation process.

The present invention provides a methodology for controlling the carbon dioxide levels inside the incubator without restricting or changing the amount of fresh air exchanges that is done in conventional incubators. This is achieved by feeding carbon dioxide into the incubator from an external carbon dioxide source in a controlled fashion based on measurements of carbon dioxide levels inside the incubator. Thus, as a result, carbon dioxide levels can be controlled independent of the temperature and humidity. This results in the most optimum temperature, humidity and carbon dioxide environment for egg incubation.

The incubation of chicken eggs in typical commercial practice does not employ the controlled CO₂ atmospheres according to the present invention, and thus does not add any CO₂ from an external source. As a result, the concentration of CO₂ in the incubator atmosphere varies widely during the multi-day course of the incubation; CO₂ concentration levels can and do change during the incubation between values as widely separated as 500 to 7,000 ppm. The CO₂ concentration changes throughout the 18 to 21 days of incubation and hatching, and there is no pattern to the change. Some CO₂ is generated by the egg/embryo itself as part of its respiratory process and enters the incubator atmosphere through the eggshell. Overall, in such commercial incubator operations, the concentration of CO₂ in the incubator atmosphere is influenced only by the exchanges of conditioned air to control temperature, oxygen and humidity levels, and not by the deliberate feeding of CO₂ to maintain a desired CO₂ level during incubation. The embryos subjected to these conditions of varying CO₂ concentration levels typically exhibit significant levels of Woody Breast.

To carry out the incubation method according to the present invention, one or more fertilized unhatched eggs are placed into the incubator, typically onto a rack in space 3 (seen in Figure 1). The desired temperature and humidity levels are established in space 3 by conditioning the air entering the incubator, by carrying out air exchange as needed between the atmospheres inside and outside the incubator, and by heating, cooling, humidifying, and dehumidifying the atmosphere in the incubator using conventional equipment situated within or in fluid communication with the incubator for performing each of said functions. Then, carbon dioxide concentration according to any of the regimens described herein, is established in the gaseous atmosphere in space 3 to which the egg(s) being incubated are exposed.

### Regimen 1:

Beginning at a point in time from fertilization up to four weeks following fertilization, the fertilized unhatched egg is placed in the incubator and is kept in the incubator in contact with a gaseous atmosphere in the incubator that contains carbon dioxide at an incubation concentration that is within 10%, and preferably within 5%, of a set value between 7,500 ppm CO₂ and 20,000 ppm CO₂ for a period of at least 12 days of the next 18 consecutive days, preferably all 18 days. Preferably, the incubation concentration of carbon dioxide is within 10%, and preferably within 5%, of a set value between 7,500 ppm CO₂ and 15,000 ppm CO₂. More preferably, the incubation concentration is maintained at within 10%, and preferably within 5%, of 10,000 ppm CO₂. The set value can be varied during the 18-day period, but the set value is preferably constant throughout the 18-day period. During the 18-day period, carbon dioxide is fed into the atmosphere in the incubator as necessary to maintain the CO₂ concentration in which the egg is incubated at the desired incubation concentration.

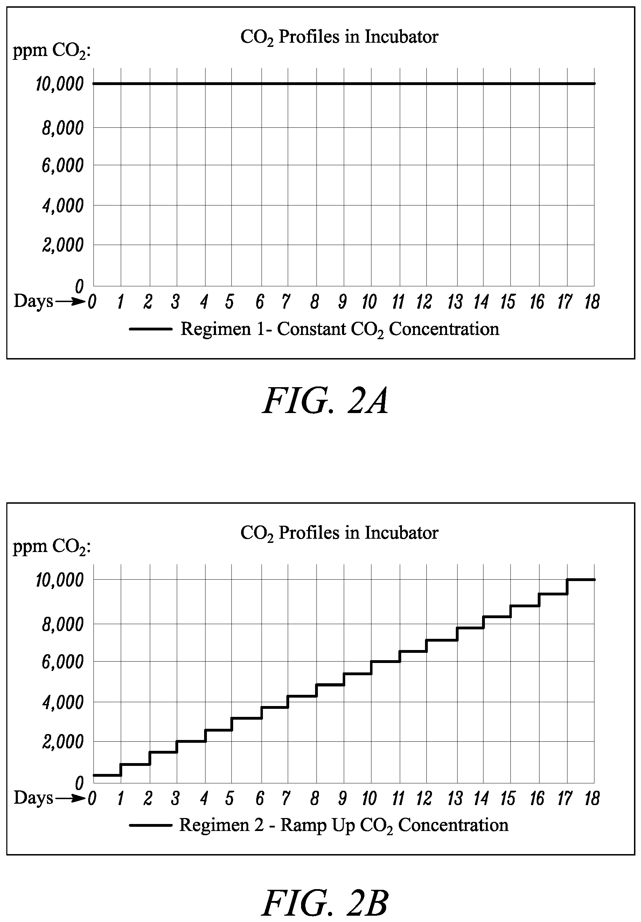

Figure 2A illustrates one embodiment of this regimen, in which the concentration of CO₂ is maintained at a constant value of 10,000 ppm for the full extent of 18 days of incubation of the egg.

At the end of the 18-day period, the egg can be removed to a hatching room, or it can be kept in the incubator, for a total of up 3 additional days. During that period of up to 3 additional days, one may choose between (a) not feeding any additional CO₂ from any source outside the egg into the atmosphere to which the egg is exposed (thereby permitting the atmosphere to contain CO₂ naturally present in air and any CO₂ that is generated by the embryos and passes through the shell into the incubator atmosphere); and (b) feeding CO₂ as necessary from any source outside the egg so that the atmosphere to which the egg is exposed contains carbon dioxide at a concentration of up to within 10%, and preferably within 5%, of a set value that is between 7,500 ppm CO₂ and 20,000 ppm CO₂ (preferably, between 7,500 ppm CO₂ and 15,000 ppm CO₂, more preferably 10,000 ppm).

### Regimen 2:

Beginning at a point in time from fertilization up to four weeks following fertilization, the fertilized unhatched egg is placed in the incubator in contact with a gaseous atmosphere in the incubator that contains carbon dioxide at an incubation concentration which follows the following pattern:
For up to 18 consecutive periods (termed "incremental periods" herein) of 18 to 24 hours each, the carbon dioxide concentration in the gaseous atmosphere is maintained at a value that is within 10%, and preferably within 5%, of a set value between 350 ppm CO₂ and 20,000 ppm CO₂. In each successive incremental period, the set value increases, so that the actual carbon dioxide concentration in the incubator is higher than what it was in the immediately preceding incremental period. Preferably, the set value increases from one incremental period to the next by equal increments.

Carbon dioxide is fed into space 3 as necessary to increase the carbon dioxide concentration in the incubator to the next desired higher value. The carbon dioxide concentration is established and maintained at the desired value by feeding carbon dioxide into the gaseous atmosphere from a source outside the egg (such as through outlet 12) as necessary to maintain the CO₂ concentration in the gaseous atmosphere within 10%, and preferably within 5%, of said set value. Preferably, in the last incremental period, the carbon dioxide concentration in the atmosphere is within 10%, and preferably within 5%, of a set value between 7,500 ppm and 20,000 ppm CO₂ and more preferably within 10%, and preferably within 5%, of a set value between 7,500 ppm and 15,000 ppm or even more preferably within 10% and preferably within 5% of 10,000 ppm CO₂. Thus, the set values in the 24-hour periods near the beginning of this regimen should not be near 20,000 ppm CO₂ or even 15,000 ppm CO₂ or even 10,000 ppm or even 7,500 ppm CO₂.

Figure 2B illustrates an embodiment of this regimen. The distance between each pair of consecutive numbers on the x-axis (such as 0 to 1, 1 to 2, 2 to 3, and so on) represents the passage of one 24-hour period. In the embodiment illustrated in Figure 2B, the CO₂ concentration is maintained at a constant level during each 24-hour period, and from one 24-hour period to the very next 24-hour period the CO₂ concentration in the incubator is increased to a higher level which is then held constant throughout that next 24-hour period. In this embodiment, the CO₂ concentration in the incubator is about 350 ppm during the first 24-hour period, and is 10,000 ppm during the eighteenth 24-hour period. Figure 2B illustrates an embodiment in which the CO₂ concentration in the incubator is increased by the same increment from each 24-hour period to the next, though increasing the CO₂ concentration in the incubator by equal increments is not necessary in the practice of this invention.

At the end of the up to 18 periods of up to 24 hours, the egg can be removed to a hatching room, or it can be kept in the incubator, for a total of up 3 additional days. During that period of up to 3 additional days, one may choose between (a) not feeding any additional CO₂ from any source outside the egg into the atmosphere to which the egg is exposed (thereby permitting the atmosphere to contain CO₂ naturally present in air and any CO₂ that is generated by the embryos and passes through the shell into the incubator atmosphere); and (b) feeding CO₂ as necessary from any source outside the egg so that the atmosphere to which the egg is exposed contains carbon dioxide at a concentration of up to within 10%, and preferably within 5%, of a set value that is between 7,500 ppm CO₂ and 20,000 ppm CO₂ (preferably, between 7,500 ppm CO₂ and 15,000 ppm CO₂, more preferably up to 10,000 ppm).

### Regimen 3:

Beginning at a point in time from fertilization up to four weeks following fertilization, the fertilized unhatched egg is placed in the incubator in contact with a gaseous atmosphere in the incubator that contains carbon dioxide at an incubation concentration which follows the following pattern:
The carbon dioxide concentration in the gaseous atmosphere is alternated between values for what is termed the exposure periods, and values for what is termed the intervening periods. In the exposure periods, the carbon dioxide concentration is maintained at a value that is within 10%, and preferably within 5%, of a set value between 7,500 ppm CO₂ and 20,000 ppm (preferably 15,000 ppm or even up to 10,000 ppm) of CO₂ by feeding carbon dioxide into the gaseous atmosphere from a source outside the egg as necessary to maintain the CO₂ concentration in the gaseous atmosphere within 10%, and preferably within 5%, of said set value. The set value is the same in all of the first 24-hour periods of each 48-hour period.

Alternatingly between exposure periods, in the intervening periods, no carbon dioxide is fed into the gaseous atmosphere of the incubator from outside the egg. The carbon dioxide concentration in the gaseous atmosphere in space 3 may decrease during this intervening period, or it may increase (or have its decrease offset) by carbon dioxide that passes into the space 3 from within the egg, through the intact but naturally microporous shell. However, for the intervening periods, the CO₂ concentration in the incubator can be reduced to a desired low level, as low as ambient, by opening vents that permit the atmosphere within the incubator to pass out of the incubator (optionally activating fans or blowers to facilitate movement of the atmosphere out of the incubator) and feeding ambient air at sufficient levels to establish only the lower desired CO₂ concentration level inside the incubator.

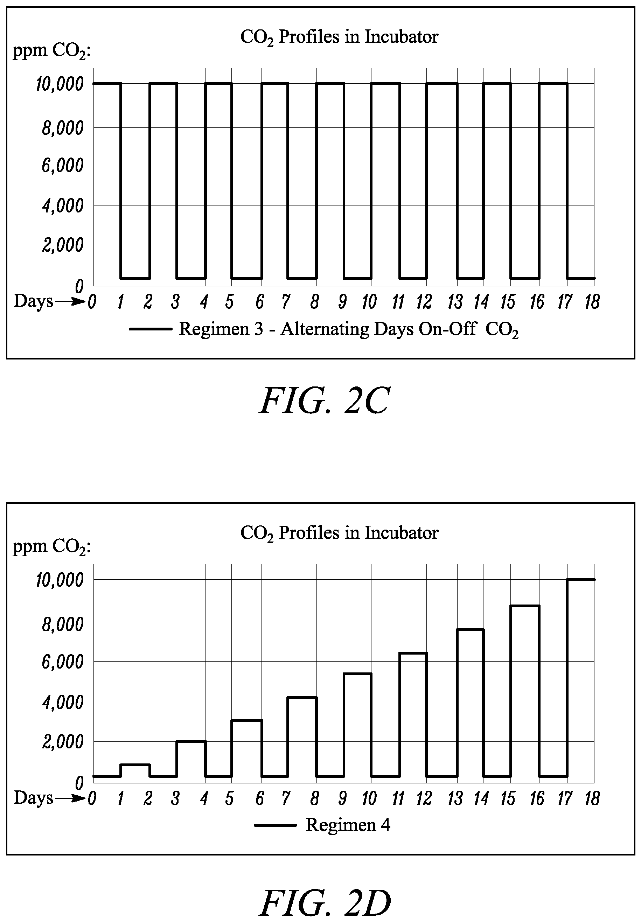

Figure 2C illustrates an embodiment of this regimen. In this embodiment, consecutive 48-hour periods are represented by the space from 0 to 2 and then by the spaces between consecutive even numbers (that is, 2 to 4, 4 to 6, and so on, through 16-18). Within each 48-hour period that is depicted in this way, the first 24-hour period is the interval extending from the lower even number, to the next odd number to the right, and the second 24-hour period is the interval extending from that odd number to the next even number to the right. For example, in the 48-hour period that is depicted as extending from 4 to 6, the first 24-hour period extends from 4 to 5 and the second 24-hour period extends from 5 to 6.

In the embodiment illustrated in Figure 2C, sufficient CO₂ will have been fed into the incubator atmosphere so that the CO₂ concentration in the incubator is 10,000 ppm in the 24-hour period from 0 to 1 (this being an exposure period), and CO₂ will have been vented out of the incubator so that the CO₂ concentration in the incubator atmosphere is as low as ambient in the 24-hour period from 1 to 2 (this being an intervening period). Then, sufficient CO₂ is injected into the incubator atmosphere so that the CO₂ concentration in the incubator is 10,000 ppm in the 24-hour exposure period from 2 to 3, following which addition of CO₂ into the incubator is discontinued and the CO₂ concentration in the incubator is again lowered to as low as ambient in the 24-hour intervening period from 3 to 4. This pattern is repeated alternatingly for the duration of the regimen. The establishment of CO₂ concentrations in the incubator alternating between 10,000 ppm and as low as ambient in consecutive 24-hour periods is continued in the same manner through the eighteenth 24-hour period. Depending on the number of eggs incubated at the same time in the incubator, the CO₂ levels on the alternate days when no external or additional CO2 is fed, may increase above the normal ambient value, since the eggs themselves generate CO₂.

At the end of the ninth, tenth or eleventh 48-hour period, the egg can be removed to a hatching room, or it can be kept in the incubator, for a total of up 21 days from when the egg was first placed into the incubator. During that period following the end of the ninth 48-hour period, one may choose to add no carbon dioxide into the incubator from any source outside the egg, or one may choose to feed carbon dioxide from any source outside the egg to maintain a concentration in the incubator atmosphere of up to 20,000 ppm CO₂ and preferably up to 15,000 ppm or even 10,000 ppm CO₂.

### Regimen 4:

Beginning at a point in time from fertilization up to four weeks following fertilization, the fertilized unhatched egg is placed in the incubator in contact with a gaseous atmosphere in the incubator that contains carbon dioxide at an incubation concentration which follows the following pattern:
The carbon dioxide concentration in the gaseous atmosphere is alternated between values for what is termed the exposure periods, and values for what is termed the intervening periods. In the exposure periods, the carbon dioxide concentration is maintained at a value that is within 10%, and preferably within 5%, of a set value between the CO₂ concentration in the ambient atmosphere and 20,000 ppm of CO₂ by feeding carbon dioxide into the gaseous atmosphere from a source outside the egg as necessary to maintain the CO₂ concentration in the gaseous atmosphere within 10%, and preferably within 5%, of said set value. The CO₂ concentration and the set value in each exposure period is higher than the set value and CO₂ concentration in the preceding exposure periods, such that in the last incremental period the CO₂ concentration in the gaseous atmosphere is within 10%, and preferably within 5%, of a value between 7,500 ppm CO₂ and 20,000 ppm CO₂.

Alternatingly between exposure periods, in the intervening periods, no carbon dioxide is fed into the gaseous atmosphere of the incubator from outside the egg. The carbon dioxide concentration in the gaseous atmosphere in space 3 may decrease during this intervening period, or it may increase (or have its decrease offset) by carbon dioxide that passes into the space 3 from within the egg, through the intact but naturally microporous shell. However, for the intervening periods, the CO₂ concentration in the incubator can be reduced to a desired low level such as the CO₂ concentration in the ambient atmosphere by opening vents that permit the atmosphere within the incubator to pass out of the incubator (optionally activating fans or blowers to facilitate movement of the atmosphere out of the incubator) and feeding air at sufficient levels to establish only the lower desired CO₂ concentration level inside the incubator.

Figure 2D illustrates an embodiment of this regimen 4. In this embodiment, consecutive 48-hour periods are represented by the space from 0 to 2 and then by the spaces between consecutive even numbers (that is, 2 to 4, 4 to 6, and so on, through 16-18). Within each 48-hour period that is depicted in this way, the intervening period is the interval extending from zero or from the lower even number, to the next odd number to the right, and the exposure period is the interval extending from that odd number to the next even number to the right. For example, in the 48-hour period that is depicted as extending from 4 to 6, the intervening period extends from 4 to 5 and the exposure period extends from 5 to 6.

In the embodiment illustrated in Figure 2D, CO₂ will have been vented out of the incubator so that the CO₂ concentration in the incubator atmosphere is around 400 ppm in the 24-hour period from 0 to 1 (this being an intervening period). Then sufficient CO₂ will have been fed into the incubator atmosphere so that the CO₂ concentration in the incubator is 10,000 ppm in the 24-hour period from 1 to 2 (this being an exposure period). After CO₂ is vented from the incubator to establish the intervening period from 2 to 3, sufficient CO₂ is fed into the incubator atmosphere so that the CO₂ concentration in the incubator is 10,000 ppm in the 24-hour exposure period from 3 to 4, following which addition of CO₂ into the incubator is discontinued and the CO₂ concentration in the incubator is again lowered to around 400 ppm in the 24-hour intervening period from 4 to 5. This pattern is repeated alternatingly for the duration of the regimen. The establishment of CO₂ concentrations in the incubator alternating between 10,000 ppm and around 400 ppm in consecutive 24-hour periods is continued in the same manner through the eighteenth 24-hour period. Depending on the number of eggs incubated at the same time in the incubator, the CO₂ levels on the alternate days when no external or additional CO2 is added, may increase above the normal atmospheric value of around 400 ppm, since the eggs themselves generate CO₂.

At the end of the ninth, tenth or eleventh 48-hour period, the egg can be removed to a hatching room, or it can be kept in the incubator, for a total of up 21 days from when the egg was first placed into the incubator. During that period following the end of the ninth 48-hour period, one may choose to add no carbon dioxide into the incubator from any source outside the egg, or one may choose to feed carbon dioxide from any source outside the egg to maintain a concentration in the incubator atmosphere between 7,500 ppm to 20,000 ppm CO₂ and preferably between 7,500 ppm to 15,000 ppm or more preferably at 10,000 ppm CO₂.

Establishing a lower CO₂ concentration in any of the respective intervening periods can be achieved in the same manner as described above with respect to Regimen 3.

In each of the foregoing regimens 1 through 4, where carbon dioxide concentrations are expressed as within 10%, and preferably within 5%, of a given value, it is more preferred that the concentrations are within 1% (instead of within 10% or 5%) of the given value.

At the end of any regimen of exposing the egg to carbon dioxide-containing atmospheres as described above, a chick is thereafter hatched from the thus treated and incubated egg. The chick is then fed water and food and is grown into a fully-grown chicken, under conventional practices by which chicks are fed and enabled to grow into fully-grown chickens.

As shown in the Example below, the aforementioned regimens of exposure of the egg to an atmosphere containing prescribed concentrations of carbon dioxide, for prescribed periods of time, have been found to promote growth of chickens to full size, even to sizes in excess of 2,7 kg (6 pounds) or in excess of 3 kg (6,5 pounds), with reduced or no incidence of Woody Breast in the chicken.

The aforementioned benefits in addition to reduction of incidence of Woody Breast, namely increased hatchability of the egg; increased hatch weight of the chicken; increased viability and decreased mortality of the chicken; increased weight gain of the growing chicken;, have also been found with the regimens described herein of established CO₂ concentrations in the incubator for established periods of time.

Procedures that incorporate any of these regimens have additional advantages. They are practically implementable in commercial hatcheries while still allowing hatchery personnel to enter the incubators for short periods, as they normally do to perform regular tasks, without endangering the personnel on account of excessive or prolonged exposure to an atmosphere containing unsafe levels of carbon dioxide. In addition, these regimens do not cause other harmful side-effects to the chicken through its life cycle. Thus, these regimens do not cause reduction in rate of growth, final weight, % hatchability, % livability, or susceptibility to other disorders or diseases.

### EXAMPLES

The above regimens of incubation in the presence of increased and controlled concentrations of CO₂ have been found to show reduction in incidence or severity of Woody Breast in chickens.

### Example - Regimen 1

### Experimental:

900 fertilized eggs from a commonly used commercial chicken strain, Ross 708, that were less than 1 week old since being laid, and laid in the same laying facility by layers (chickens) of the same age, were split equally into three batches of 300 each. One batch, referred to as control batch, was incubated for 18 days in an atmosphere in which no additional CO₂ was injected into this atmosphere from any source outside the egg. For this batch, the CO₂ concentration inside the incubator varied between the CO₂ concentration of the ambient atmosphere (i.e. about 409 ppm) and as high as 1,500 ppm (resulting from CO₂ generation by the eggs themselves). The second batch, referred to as 4,000 ppm test CO₂ batch or 0.4% CO₂ test batch, was incubated for 18 days wherein the CO₂ concentration in the incubator from the start of the first day through the end of the eighteenth day was maintained at 4,000 ppm (i.e. 0.4% CO₂) by occasional injections of CO₂ as necessary. The third batch, referred to as 10,000 ppm test CO₂ batch or 1% CO₂ test batch, was incubated for 18 days according to Regimen 1 described herein, wherein the CO₂ concentration in the incubator from the start of the first day through the end of the eighteenth day was maintained at 10,000 ppm (i.e. 1% CO₂) by occasional injections of CO₂ as necessary. All three batches were incubated at approximately 100⁰F and between 30% and 70% relative humidity. At the end of the eighteenth day of incubation, all three batches of eggs were transferred to hatcher equipment, where the eggs hatched over the next 3 days. No external CO₂ was injected into the hatcher from any source outside the eggs for this period of 3 days. Thus, the only difference between the conditions under which the three batches were incubated was that in the control batch no additional CO₂ was injected, whereas for the other two batches additional, external CO₂ was injected to subject the eggs to CO₂ concentrations of 4,000 ppm and 10,000 ppm respectively. During the incubation period the oxygen concentration in the control incubator was always above 20%, whereas in the 4,000 ppm and 10,000 ppm CO₂ controlled incubators, the oxygen level was typically above 19%.

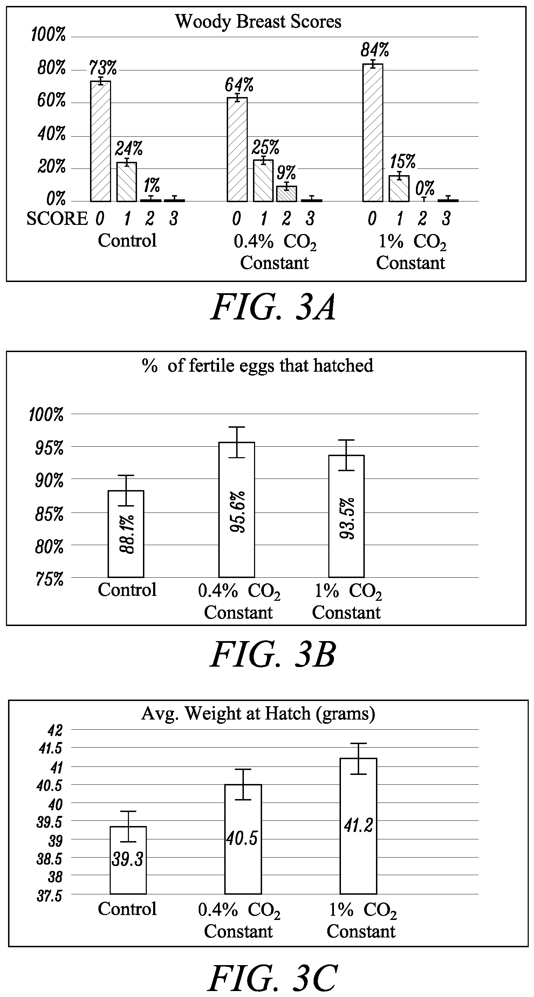

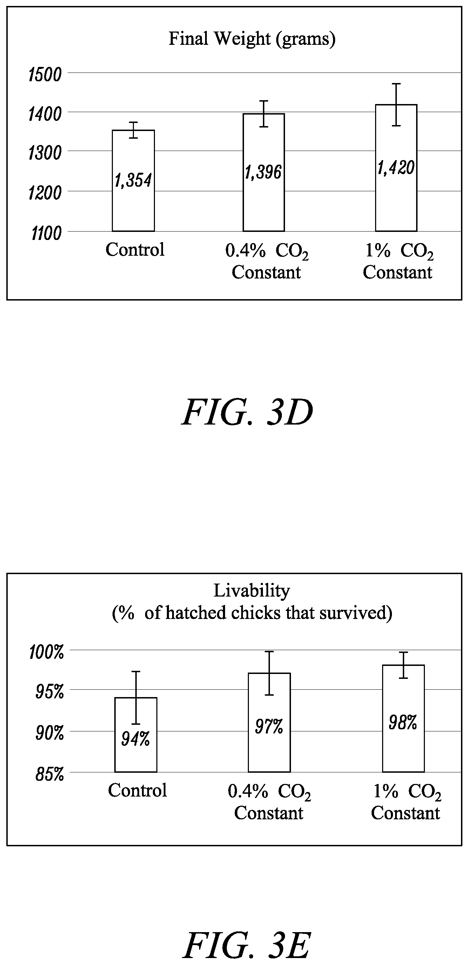

Once the chicks hatched, approximately 150 of the male chicks from each batch were taken to grow cages and they began to be fed water and feed. From this point onwards, there was no difference in the treatment of the birds. 28 days after hatching the chickens from each batch were weighed and then stunned. Then the birds were measured for Woody Breast scores by manual palpitation by a trained panel of experts under single-blinded conditions. Each breast was given a score of either 0, 1, 2 or 3. Score 0 means no WB was detected. Score 3 meant very high levels of WB detected and scores 1 and 2 meant intermediate levels of WB were detected.
Results: Figures 3A, 3B, 3C, 3D, and 3E compare various parameters for chicken that were hatched from eggs that were incubated in CO₂ conditions where no external CO₂ was injected into the incubator (referred to as 'control' birds) vs. chicken that were hatched from eggs that were subjected to constant CO₂ concentrations of 4,000 ppm in the incubator for 18 days (referred to as '4,000 ppm CO₂' or '0.4% CO₂' birds) vs. chicken that were hatched from eggs that were subjected to constant CO₂ concentrations of 10,000 ppm in the incubator for 18 days (referred to as '10,000ppm CO₂' or '1% CO₂' birds).
Figure 3A shows Woody Breast scores for chickens in the three batches. As can be seen, the CO₂ treatment according to Regimen 1 at 10,000 ppm (1% CO₂) significantly reduced the incidence of WB in the chickens compared to the control birds. The % of birds scoring 1 reduced from 24% to 15%. However, for the 0.4% CO₂ test batch, the WB scores were higher, indicating an increase in WB incidence. There was an increase in score 2 scores from 1% in control to 9% in the 0.4% CO₂ batch, which is significant. These results show that simply increasing the concentration of CO₂ in the incubator is not sufficient. Specific recipes are needed to improve the woody breast scores of the birds.
Figure 3B compares the percent of fertile eggs that hatched at the end of 21 days of incubation. 88.1% of the control birds hatched at the end of the 21 days, whereas 95.6% of the 0.4% CO₂ test birds hatched, whereas 93.5% of the test 1% CO₂ eggs hatched. This is important since an increase in hatchability significantly improves the profitability of the operation.
Figure 3C compares the average weight of the chicken just after they hatched. The average weight of the birds increased by approximately 5% due to the 1% CO₂ treatment in the incubator.
Figure 3D compares the final weight of the birds at 28 days. The average weight of the 1% CO₂ birds was approximately 5% higher than the control birds.
Figure 3E compares the percentage of hatched birds that survived through to the end of the 28 days. Approximately 4% more of the 1% CO₂ birds survived compared to the control birds.

### Example - Regimen 2

### Experimental:

600 fertilized eggs from a commonly used commercial chicken strain, Ross 708, that were less than 1 week old since being laid, and laid in the same laying facility by layers (chickens) of the same age, were split equally into batches of 300 each. One batch, referred to as control batch, was incubated for 18 days in an atmosphere in which no additional CO₂ was injected into this atmosphere from any source outside the egg. For this batch, the CO₂ concentration inside the incubator varied between ambient atmospheric (i.e. about 409 ppm) and as high as 1,500 ppm (resulting from CO₂ generation by the egg). The other batch, referred to as test CO₂ ramp batch or 1% CO₂ ramp test batch, was incubated for 18 days according to Regimen 2 described herein, wherein the CO₂ concentration in the incubator for the first 24 hours was maintained at normal atmospheric conditions (i.e. approximately 409 ppm) by not injecting any additional external CO₂ and then every 24 hours the CO₂ concentration was increased for 24 hours by an equal amount such that on the 18^{th} day the CO₂ concentration was 10,000 ppm (i.e. 1% CO₂) by occasional injections of CO₂ as necessary. Both batches were incubated at approximately 100⁰F and between 30% and 70% relative humidity. At the end of the eighteenth day of incubation, both batches of eggs were transferred to hatcher equipment, where the eggs hatched over the next 3 days. No CO₂ was injected into the hatcher from any source outside the eggs for this period of 3 days for either batch. Thus, the only difference between the conditions under which the two batches were incubated was that one batch was subjected to the Regimen 2 reaching a concentration of 10,000 ppm CO₂ concentration on the 18^{th} day. During the incubation period the oxygen concentration in the control incubator was always above 20%, whereas in the 1% CO₂ ramp up incubators, the oxygen level was typically above 19%.

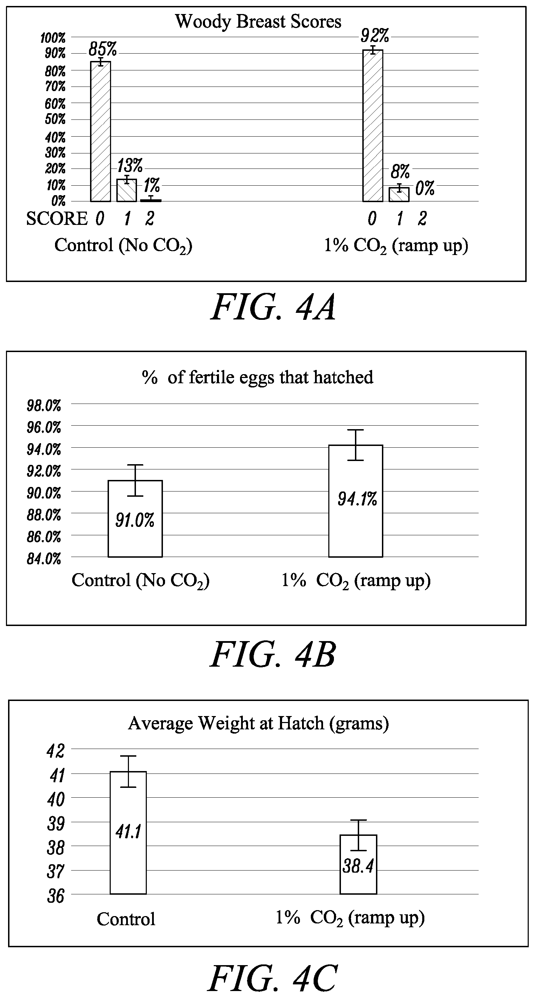

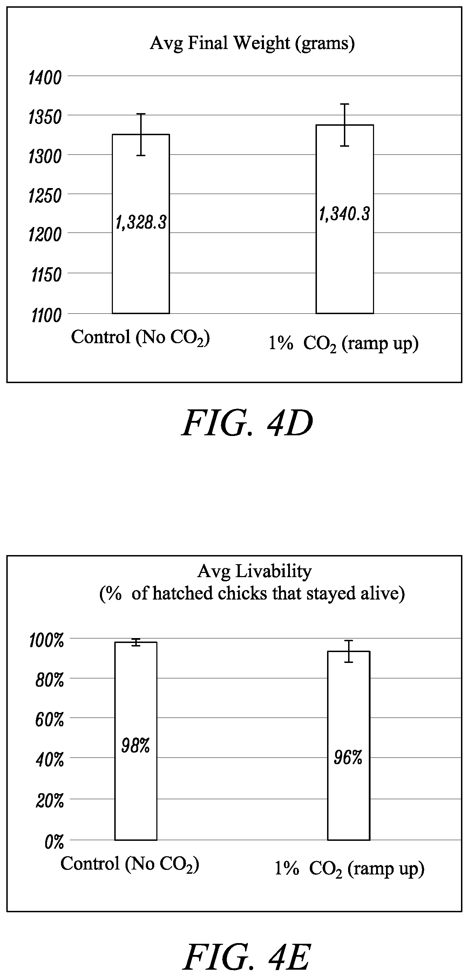

Once the chicks hatched, approximately 150 of the male chicks from each batch were taken to grow cages and they began to be fed water and feed. From this point onwards, there was no difference in the treatment of the birds. 28 days after hatching the chickens from each batch were weighed and then stunned. Then the birds were measured for Woody Breast scores by manual palpitation by a trained panel of experts under single-blinded conditions. Each breast was given a score of either 0, 1, 2 or 3. Score 0 means no WB was detected. Score 3 meant very high levels of WB detected and scores 1 and 2 meant intermediate levels of WB were detected.
Results: Figures 4A, 4B, 4C, 4D, and 4E compare various parameters for chicken that were hatched from eggs that were incubated in CO₂ conditions where no external CO₂ was injected into the incubator (referred to as 'control' birds) vs. chicken that were hatched from eggs that were subjected to ramp up CO₂ concentrations reaching 10,000 ppm in the incubator on day 18 (referred to as '10,000ppm CO₂ ramp up' or '1% CO₂ ramp up' birds).
Figure 4A shows Woody Breast scores for chickens which as eggs being incubated had been subjected to ramp up CO₂ concentrations reaching 10,000 ppm CO₂ in the incubator, or atmospheric CO₂ concentration with no injection of additional CO₂ into the incubator from any source outside of the egg. As can be seen, the CO₂ treatment according to Regimen 2 significantly reduced the incidence of WB in the chickens. The % of birds scoring 1 reduced from 13% to 8%.
Figure 4B compares the percent of fertile eggs that hatched at the end of 21 days of incubation. 91% of the control birds hatched at the end of the 21 days, whereas 94.1% of the test 1% CO₂ ramp up eggs hatched. This is important since an increase in hatchability significantly improves the profitability of the operation.
Figure 4C compares the average weight of the chicken just after they hatched. The average weight of the birds at hatch was approximately 6.5% lower for the 1% CO₂ ramp up treatment in the incubator compared to the control batch. However as seen in figure 4D, the 1% CO₂ ramp up birds quickly put on weight during the next 28 days, ending up slightly heavier than the control birds.
Figure 4E shows the there was no statistical difference in the percentage of birds that survived, although the average livability was slightly higher in the control birds.

### Example - Regimen 3

### Experimental:

600 fertilized eggs from a commonly used commercial chicken strain, Ross 708, that were less than 1 week old since being laid, and laid in the same laying facility by layers (chickens) of the same age, were split equally into batches of 300 each. One batch, referred to as control batch, was incubated for 18 days in an atmosphere in which no additional CO₂ was injected into this atmosphere from any source outside the egg. For this batch, the CO₂ concentration inside the incubator varied between normal atmospheric (i.e. about 409 ppm) and as high as 1,500 ppm (resulting from CO₂ generation by the egg). The other batch, referred to as 7,500 ppm test CO₂ on-off batch or 0.75% CO₂ on-off test batch, was incubated for 18 days according to Regime 3 described herein, wherein the CO₂ concentration in the incubator for the first 24 hours was maintained constant at 7,500 ppm, followed by the next 24 hours where no external CO₂ was injected into the incubator (and the only CO₂ in the incubator came from the normal atmosphere and the CO₂ generation from the eggs). These two 24 hour periods were then continuously repeated till the end of day 18. During the CO₂ off periods, the CO₂ concentration in the incubator was between 409 ppm and 1,500 ppm. Both batches were incubated at approximately 100⁰F and between 30% and 70% relative humidity. At the end of the eighteenth day of incubation, both batches of eggs were transferred to hatcher equipment, where the eggs hatched over the next 3 days. No CO₂ was injected into the hatcher from any source outside the eggs for this period of 3 days. Thus, the only difference between the conditions under which the two batches were incubated was that one batch was subjected to the Regimen 3 reaching a concentration of 10,000 ppm CO₂ concentration on the 18^{th} day. During the incubation period the oxygen concentration in the control incubator was always above 20%, whereas in the 0.75% CO₂ on-off incubators, the oxygen level was typically above 19%.

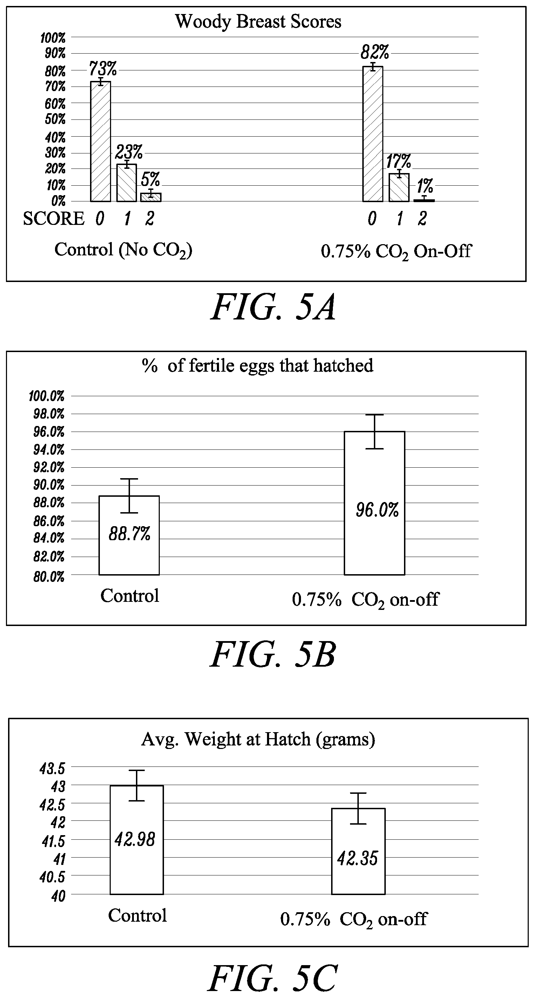

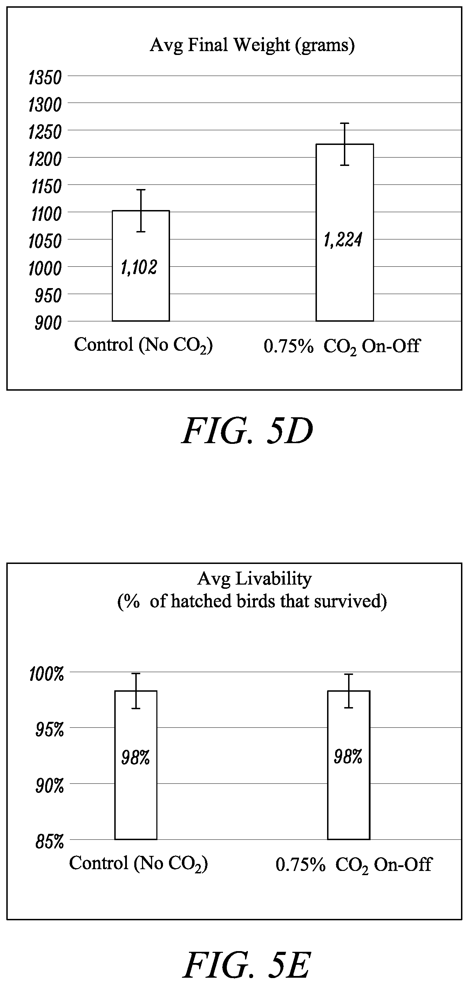

Once the chicks hatched, approximately 150 of the male chicks from each batch were taken to grow cages and they began to be fed water and feed. From this point onwards, there was no difference in the treatment of the birds. 28 days after hatching the chickens from each batch were weighed and then stunned. Then the birds were measured for Woody Breast scores by manual palpitation by a trained panel of experts under single-blinded conditions. Each breast was given a score of either 0, 1, 2 or 3. Score 0 means no WB was detected. Score 3 meant very high levels of WB detected and scores 1 and 2 meant intermediate levels of WB were detected.
Results: Figures 5A, 5B, 5C, 5D, and 5E compare various parameters for chicken that were hatched from eggs that were incubated in CO₂ conditions where no external CO₂ was injected into the incubator (referred to as 'control' birds) vs. chicken that were hatched from eggs that were subjected to on-off CO₂ concentrations reaching 7,500 ppm on alternate days till day 18 (referred to as '7,500ppm CO₂ on-off' or '0.75% CO₂ on-off' birds).
Figure 5A compares Woody Breast scores of the control and 0.75% CO₂ on-off birds. As can be seen, the CO₂ treatment according to Regimen 3 significantly reduced the incidence of WB in the chickens. The % of birds scoring 1 reduced from 23% to 17%, scoring 2 reduced from 5% to 1%, while birds scoring 0 increased from 73% to 82% on average.
Figure 5B compares the percent of fertile eggs that hatched at the end of 21 days of incubation. 88.7% of the control birds hatched at the end of the 21 days, whereas 96% of the test 0.75% CO₂ on-off eggs hatched. This is important since an increase in hatchability significantly improves the profitability of the operation.
Figure 5C compares the average weight of the chicken just after they hatched. The average weight of the birds at hatch was approximately 1.5% lower due to the 0.75% CO₂ on-off treatment in the incubator as compared to the control batch. However as seen in Figure 5D, the 0.75% CO₂ on-off birds quickly put on weight during the next 28 days, ending up 11% heavier than the control birds.
Finally, Figure 4E shows the there was no statistical difference in the percentage of birds that survived.

## Claims

1. A method of incubating a fertilized unhatched poultry egg to hatching, comprising incubating the egg for an incubation period of 18 to 21 consecutive days in a gaseous atmosphere which is in contact with the egg, and during that time, feeding carbon dioxide from a source outside the egg into the gaseous atmosphere as necessary so that for at least one period of time of at least 12 hours the carbon dioxide concentration in the gaseous atmosphere which is in contact with the egg is 7,500 ppm to 20,000 ppm.

2. A method according to claim 1, comprising
incubating the egg for an incubation period of 18 to 21 consecutive days in a gaseous atmosphere which is in contact with the egg, and during that time, feeding carbon dioxide from a source outside the egg into the gaseous atmosphere as necessary so that for at least one period of time of at least 24 hours the carbon dioxide concentration in the gaseous atmosphere which is in contact with the egg is 7,500 ppm to 20,000 ppm.

3. A method according to claim 1, comprising
incubating the egg for an incubation period of 18 to 21 consecutive days in a gaseous atmosphere which is in contact with the egg, and during that time, feeding carbon dioxide from a source outside the egg into the gaseous atmosphere as necessary so that for at least six periods of time of at least 12 hours the carbon dioxide concentration in the gaseous atmosphere which is in contact with the egg is 7,500 ppm to 20,000 ppm.

4. A method according to claim 1, comprising
exposing the fertilized unhatched poultry egg for at least 1 day of the first 18 days of the incubation period to a gaseous atmosphere which is in contact with the egg and which contains carbon dioxide at an incubation concentration that is within 10%, and preferably within 5%, of a set value between 7,500 ppm CO₂ and 20,000 ppm CO₂, and during the 18-day period feeding carbon dioxide into the atmosphere as necessary to maintain the CO₂ concentration in which the egg is incubated at said incubation concentration, and then for 3 consecutive days immediately following the 18-day period incubating the egg in an atmosphere into which no additional CO₂ is fed from any source outside the egg or into which CO₂ is fed from a source outside the egg as necessary to maintain the CO₂ concentration of the atmosphere in contact with the egg at a concentration that is within 10%, and preferably within 5%, of a set value between 7,500 ppm CO₂ and 20,000 ppm CO₂.

5. A method according to claim 4, comprising
exposing the fertilized unhatched poultry egg for at least 6 days of the first 18 days of the incubation period to a gaseous atmosphere which is in contact with the egg and which contains carbon dioxide at an incubation concentration that is within 10%, and preferably within 5%, of a set value between 7,500 ppm CO₂ and 20,000 ppm CO₂, and during the 18-day period feeding carbon dioxide into the atmosphere as necessary to maintain the CO₂ concentration in which the egg is incubated at said incubation concentration, and then for 3 consecutive days immediately following the 18-day period incubating the egg in an atmosphere into which no additional CO₂ is fed from any source outside the egg or into which CO₂ is fed from a source outside the egg as necessary to maintain the CO₂ concentration of the atmosphere in contact with the egg at a concentration that is within 10%, and preferably within 5%, of a set value between 7,500 ppm CO₂ and 20,000 ppm CO₂.

6. A method according to claim 4 wherein the fertilized unhatched poultry egg is a chicken egg.

7. A method according to claim 6, comprising
exposing the fertilized unhatched chicken egg for at least 12 days of the first 18 days of the incubation period to a gaseous atmosphere which is in contact with the egg and which contains carbon dioxide at an incubation concentration that is within 10%, and preferably within 5%, of a set value between 7,500 ppm CO₂ and 20,000 ppm CO₂, and during the 18-day period feeding carbon dioxide into the atmosphere as necessary to maintain the CO₂ concentration in which the egg is incubated at said incubation concentration, and then for 3 consecutive days immediately following the 18-day period incubating the egg in an atmosphere into which no additional CO₂ is fed from any source outside the egg or into which CO₂ is fed from a source outside the egg as necessary to maintain the CO₂ concentration of the atmosphere in contact with the egg at a concentration that is within 10%, and preferably within 5%, of a set value between 7,500 ppm CO₂ and 20,000 ppm CO₂.

8. A method according to claim 6, comprising
exposing the fertilized unhatched chicken egg throughout the first 18 days of the incubation period to a gaseous atmosphere which is in contact with the egg and which contains carbon dioxide at an incubation concentration that is within 10%, and preferably within 5%, of a set value between 7,500 ppm CO₂ and 20,000 ppm CO₂, and during the 18-day period feeding carbon dioxide into the atmosphere as necessary to maintain the CO₂ concentration in which the egg is incubated at said incubation concentration, and then for 3 consecutive days immediately following the 18-day period incubating the egg in an atmosphere into which no additional CO₂ is fed from any source outside the egg or into which CO₂ is fed from a source outside the egg as necessary to maintain the CO₂ concentration of the atmosphere in contact with the egg at a concentration that is within 10%, and preferably within 5%, of a set value between 7,500 ppm CO₂ and 20,000 ppm CO₂.

9. A method according to claim 8 wherein the set value throughout the first 18 days is constant for all 18 days.

10. A method according to claim 8 wherein the egg is incubated for a period of 18 consecutive days in a gaseous atmosphere which is in contact with the egg and which contains carbon dioxide at an incubation concentration that is within 5% of a set value between 7,500 ppm CO₂ and 15,000 ppm CO₂.

11. A method according to claim 8 wherein the egg is incubated for a period of 18 consecutive days in a gaseous atmosphere which is in contact with the egg and which contains carbon dioxide at an incubation concentration that is within 10% of a set value of 10,000 ppm CO₂.

12. A method according to claim 8 wherein the egg is incubated for a period of 18 consecutive days in a gaseous atmosphere which is in contact with the egg and which contains carbon dioxide at an incubation concentration that is within 5% of a set value of 10,000 ppm CO₂.

13. A method according to claim 8 wherein for 3 consecutive days immediately following the 18-day period the egg is incubated in an atmosphere into which CO₂ is fed from a source outside the egg as necessary to maintain the CO₂ concentration of the atmosphere in contact with the egg at a concentration that is within 5% of a set value between 7,500 ppm CO₂ and 15,000 ppm CO₂.

14. A method according to claim 8 wherein for 3 consecutive days immediately following the 18-day period the egg is incubated in an atmosphere into which CO₂ is fed from a source outside the egg as necessary to maintain the CO₂ concentration of the atmosphere in contact with the egg at a concentration that is within 10% of a set value of 10,000 ppm CO₂.

15. A method according to claim 8 wherein for 3 consecutive days immediately following the 18-day period the egg is incubated in an atmosphere into which CO₂ is fed from a source outside the egg as necessary to maintain the CO₂ concentration of the atmosphere in contact with the egg at a concentration that is within 5% of a set value of 10,000 ppm CO₂.

## Patentansprüche

1. Verfahren zum Bebrüten eines befruchteten, nicht geschlüpften Geflügeleis bis zum Schlüpfen, umfassend das Bebrüten des Eis über einen Bebrütungszeitraum von 18 bis 21 aufeinanderfolgenden Tagen in einer Gasatmosphäre, die mit dem Ei in Kontakt steht, und, wenn notwendig, während dieses Zeitraums das Einleiten von Kohlendioxid aus einer Quelle außerhalb des Eis in die Gasatmosphäre, damit über einen Zeitraum von mindestens 12 Stunden die Kohlendioxidkonzentration in der Gasatmosphäre, die mit dem Ei in Kontakt steht, 7.500 ppm bis 20.000 ppm beträgt.

2. Verfahren nach Anspruch 1, umfassend
Bebrüten des Eis über einen Bebrütungszeitraum von 18 bis 21 aufeinanderfolgenden Tagen in einer Gasatmosphäre, die mit dem Ei in Kontakt steht, und, wenn notwendig, während dieses Zeitraums das Einleiten von Kohlendioxid aus einer Quelle außerhalb des Eis in die Gasatmosphäre, damit für einen Zeitraum von mindestens 24 Stunden die Kohlendioxidkonzentration in der Gasatmosphäre, die mit dem Ei in Kontakt steht, 7.500 ppm bis 20.000 ppm beträgt.

3. Verfahren nach Anspruch 1, umfassend
Bebrüten des Eis über einen Bebrütungszeitraum von 18 bis 21 aufeinanderfolgenden Tagen in einer Gasatmosphäre, die mit dem Ei in Kontakt steht, und, wenn notwendig, während dieses Zeitraums das Einleiten von Kohlendioxid aus einer Quelle außerhalb des Eis in die Gasatmosphäre, damit für mindestens sechs Zeiträume von mindestens 12 Stunden die Kohlendioxidkonzentration in der Gasatmosphäre, die mit dem Ei in Kontakt steht, 7.500 ppm bis 20.000 ppm beträgt.

4. Verfahren nach Anspruch 1, umfassend
Aussetzen des befruchteten, nicht geschlüpften Geflügeleis über mindestens einen Tag der ersten 18 Tage des Bebrütungszeitraums einer gasförmigen Atmosphäre, die mit dem Ei in Kontakt steht und Kohlendioxid in einer Bebrütungskonzentration enthält, die innerhalb von 10 % und vorzugsweise innerhalb von 5 % eines festgelegten Wertes zwischen 7.500 ppm CO₂ und 20.000 ppm CO₂ liegt und, wenn notwendig, während des 18-tägigen Zeitraums das Einleiten von Kohlendioxid in die Atmosphäre, um die CO₂-Konzentration, bei der das Ei bebrütet wird, bei dieser Bebrütungskonzentration zu halten und dann das Bebrüten des Eis über 3 aufeinanderfolgende Tage unmittelbar nach dem 18-tägigen Zeitraum in einer Atmosphäre, in die kein zusätzliches CO₂ aus einer Quelle außerhalb des Eis eingeleitet wird oder in die, wenn notwendig, CO₂ aus einer Quelle außerhalb des Eis eingeleitet wird, um die CO₂-Konzentration der Atmosphäre, die mit dem Ei in Kontakt steht, bei einer Konzentration zu halten, die innerhalb von 10 % und vorzugsweise innerhalb von 5 % eines festgelegten Wertes zwischen 7.500 ppm CO₂ und 20.000 ppm CO₂ liegt.

5. Verfahren nach Anspruch 4, umfassend
Aussetzen des befruchteten, nicht geschlüpften Geflügeleis über mindestens 6 Tage der ersten 18 Tage des Bebrütungszeitraums einer gasförmigen Atmosphäre, die mit dem Ei in Kontakt steht und Kohlendioxid in einer Bebrütungskonzentration enthält, die innerhalb von 10 % und vorzugsweise innerhalb von 5 % eines festgelegten Wertes zwischen 7.500 ppm CO₂ und 20.000 ppm CO₂ liegt, und, wenn notwendig, während des 18-tägigen Zeitraums das Einleiten von Kohlendioxid in die Atmosphäre, um die CO₂-Konzentration, bei der das Ei bebrütet wird, bei dieser Bebrütungskonzentration zu halten und dann für 3 aufeinanderfolgende Tage unmittelbar nach dem 18-tägigen Zeitraum das Bebrüten des Eis in einer Atmosphäre, in die kein zusätzliches CO₂ aus einer Quelle außerhalb des Eis eingeleitet wird oder in die, wenn notwendig, CO₂ aus einer Quelle außerhalb des Eis eingeleitet wird, um die CO₂-Konzentration der Atmosphäre, die mit dem Ei in Kontakt steht, bei einer Konzentration zu halten, die innerhalb von 10 % und vorzugsweise innerhalb von 5 % eines festgelegten Wertes zwischen 7.500 ppm CO₂ und 20.000 ppm CO₂ liegt.

6. Verfahren nach Anspruch 4, wobei das befruchtete, nicht geschlüpfte Geflügelei ein Hühnerei ist.

7. Verfahren nach Anspruch 6, umfassend
Aussetzen des befruchteten, nicht geschlüpften Hühnereis über mindestens 12 Tage der ersten 18 Tage des Bebrütungszeitraums einer gasförmigen Atmosphäre, die mit dem Ei in Kontakt steht und Kohlendioxid in einer Bebrütungskonzentration enthält, die innerhalb von 10 % und vorzugsweise innerhalb von 5 % eines festgelegten Wertes zwischen 7.500 ppm CO₂ und 20.000 ppm CO₂ liegt, und, wenn notwendig, während des 18-tägigen Zeitraums das Einleiten von Kohlendioxid in die Atmosphäre, um die CO₂-Konzentration, bei der das Ei bebrütet wird, bei dieser Bebrütungskonzentration zu halten, und dann das Bebrüten des Eis über 3 aufeinanderfolgende Tage unmittelbar nach dem 18-tägigen Zeitraum in einer Atmosphäre, in die kein zusätzliches CO₂ aus einer Quelle außerhalb des Eis eingeleitet wird oder in die, wenn notwendig, CO₂ aus einer Quelle außerhalb des Eis eingeleitet wird, um die CO₂-Konzentration der Atmosphäre, die mit dem Ei in Kontakt steht, bei einer Konzentration zu halten, die innerhalb von 10 % und vorzugsweise innerhalb von 5 % eines festgelegten Wertes zwischen 7.500 ppm CO₂ und 20.000 ppm CO₂ liegt.

8. Verfahren nach Anspruch 6, umfassend
Aussetzen des befruchteten, nicht geschlüpften Hühnereis während der ersten 18 Tage des Bebrütungszeitraums einer gasförmigen Atmosphäre, die mit dem Ei in Kontakt steht und Kohlendioxid in einer Bebrütungskonzentration enthält, die innerhalb von 10 % und vorzugsweise innerhalb von 5 % eines festgelegten Wertes zwischen 7.500 ppm CO₂ und 20.000 ppm CO₂ liegt, und, wenn notwendig, während des 18-tägigen Zeitraums das Einleiten von Kohlendioxid in die Atmosphäre, um die CO₂-Konzentration, bei der das Ei bebrütet wird, bei dieser Bebrütungskonzentration zu halten, und dann das Bebrüten des Eis über 3 aufeinanderfolgende Tage unmittelbar nach dem 18-tägigen Zeitraum in einer Atmosphäre, in die kein zusätzliches CO₂ aus einer Quelle außerhalb des Eis eingeleitet wird oder in die, wenn notwendig, CO₂ aus einer Quelle außerhalb des Eis eingeleitet wird, um die CO₂-Konzentration der Atmosphäre, die mit dem Ei in Kontakt steht, bei einer Konzentration zu halten, die innerhalb von 10 % und vorzugsweise innerhalb von 5 % eines festgelegten Wertes zwischen 7.500 ppm CO₂ und 20.000 ppm CO₂ liegt.

9. Verfahren nach Anspruch 8, wobei der während der ersten 18 Tage festgelegte Wert für alle 18 Tage konstant ist.

10. Verfahren nach Anspruch 8, wobei das Ei über einen Zeitraum von 18 aufeinanderfolgenden Tagen in einer gasförmigen Atmosphäre bebrütet wird, die mit dem Ei in Kontakt steht und Kohlendioxid in einer Bebrütungskonzentration enthält, die innerhalb von 5 % eines festgelegten Wertes zwischen 7.500 ppm CO₂ und 15.000 ppm CO₂ liegt.

11. Verfahren nach Anspruch 8, wobei das Ei über einen Zeitraum von 18 aufeinanderfolgenden Tagen in einer gasförmigen Atmosphäre bebrütet wird, die mit dem Ei in Kontakt steht und Kohlendioxid in einer Bebrütungskonzentration enthält, die innerhalb von 10 % eines festgelegten Wertes von 10.000 ppm CO₂ liegt.

12. Verfahren nach Anspruch 8, wobei das Ei über einen Zeitraum von 18 aufeinanderfolgenden Tagen in einer gasförmigen Atmosphäre bebrütet wird, die mit dem Ei in Kontakt steht und Kohlendioxid in einer Bebrütungskonzentration enthält, die innerhalb von 5 % eines festgelegten Wertes von 10.000 ppm CO₂ liegt.

13. Verfahren nach Anspruch 8, wobei das Ei über drei aufeinanderfolgende Tage unmittelbar nach dem 18-tägigen Zeitraum in einer Atmosphäre bebrütet wird, in die, wenn notwendig, CO₂ aus einer Quelle außerhalb des Eis eingeleitet wird, um die CO₂-Konzentration der Atmosphäre, die mit dem Ei in Kontakt steht, bei einer Konzentration zu halten, die innerhalb von 5 % eines festgelegten Wertes zwischen 7.500 ppm CO₂ und 15.000 ppm CO₂ liegt.

14. Verfahren nach Anspruch 8, wobei das Ei über drei aufeinanderfolgende Tage unmittelbar nach dem 18-tägigen Zeitraum in einer Atmosphäre bebrütet wird, in die, wenn notwendig, CO₂ aus einer Quelle außerhalb des Eis eingeleitet wird, um die CO₂-Konzentration der Atmosphäre, die mit dem Ei in Kontakt steht, bei einer Konzentration zu halten, die innerhalb von 10 % eines festgelegten Wertes von 10.000 ppm CO₂ liegt.

15. Verfahren nach Anspruch 8, wobei das Ei über drei aufeinanderfolgende Tage unmittelbar nach dem 18-tägigen Zeitraum in einer Atmosphäre bebrütet wird, in die, wenn notwendig, CO₂ aus einer Quelle außerhalb des Eis eingeleitet wird, um die CO₂-Konzentration der Atmosphäre, die mit dem Ei in Kontakt steht, bei einer Konzentration zu halten, die innerhalb von 5 % eines festgelegten Wertes von 10.000 ppm CO₂ liegt.

## Revendications

1. Procédé d'incubation d'un œuf de volaille fécondé non éclos, comprenant l'incubation de l'œuf pendant une période d'incubation de 18 à 21 jours consécutifs dans une atmosphère gazeuse qui est en contact avec l'œuf, et pendant cette période, l'introduction de dioxyde de carbone à partir d'une source extérieure à l'œuf dans l'atmosphère gazeuse selon les besoins, de sorte que, pendant au moins une période d'au moins 12 heures, la concentration en dioxyde de carbone dans l'atmosphère gazeuse qui est en contact avec l'œuf est comprise entre 7 500 ppm et 20 000 ppm.

2. Procédé selon la revendication 1, comprenant
l'incubation de l'œuf pendant une période d'incubation de 18 à 21 jours consécutifs dans une atmosphère gazeuse qui est en contact avec l'œuf, et pendant cette période, l'introduction de dioxyde de carbone à partir d'une source extérieure à l'œuf dans l'atmosphère gazeuse selon les besoins, de sorte que, pendant au moins une période d'au moins 24 heures, la concentration en dioxyde de carbone dans l'atmosphère gazeuse qui est en contact avec l'œuf est comprise entre 7 500 ppm et 20 000 ppm.

3. Procédé selon la revendication 1, comprenant
l'incubation de l'œuf pendant une période d'incubation de 18 à 21 jours consécutifs dans une atmosphère gazeuse qui est en contact avec l'œuf, et pendant cette période, l'introduction de dioxyde de carbone à partir d'une source extérieure à l'œuf dans l'atmosphère gazeuse selon les besoins, de sorte que, pendant au moins six périodes d'au moins 12 heures, la concentration en dioxyde de carbone dans l'atmosphère gazeuse qui est en contact avec l'œuf est comprise entre 7 500 ppm et 20 000 ppm.

4. Procédé selon la revendication 1, comprenant
l'exposition de l'œuf de volaille fécondé non éclos pendant au moins 1 jour des 18 premiers jours de la période d'incubation à une atmosphère gazeuse qui est en contact avec l'œuf et qui contient du dioxyde de carbone à une concentration d'incubation qui se situe dans les 10 %, et de préférence dans les 5 %, d'une valeur de consigne comprise entre 7 500 ppm de CO₂ et 20 000 ppm de CO₂, et pendant la période de 18 jours, l'introduction de dioxyde de carbone dans l'atmosphère selon les besoins pour maintenir la concentration en CO₂ dans laquelle l'oeuf est incubé à ladite concentration d'incubation, puis, pendant 3 jours consécutifs immédiatement après la période de 18 jours, l'incubation de l'œuf dans une atmosphère dans laquelle aucun CO₂ supplémentaire n'est introduit à partir d'une source quelconque extérieure à l'œuf ou dans laquelle du CO₂ est introduit à partir d'une source extérieure à l'œuf selon les besoins pour maintenir la concentration en CO₂ de l'atmosphère en contact avec l'œuf à une concentration qui se situe dans les 10 %, et de préférence dans les 5 %, d'une valeur de consigne comprise entre 7 500 ppm de CO₂ et 20 000 ppm de CO₂.

5. Procédé selon la revendication 4, comprenant
l'exposition de l'œuf de volaille fécondé non éclos pendant au moins 6 jours des 18 premiers jours de la période d'incubation à une atmosphère gazeuse qui est en contact avec l'œuf et qui contient du dioxyde de carbone à une concentration d'incubation qui se situe dans les 10 %, et de préférence dans les 5 %, d'une valeur de consigne comprise entre 7 500 ppm de CO₂ et 20 000 ppm de CO₂, et pendant la période de 18 jours, l'introduction de dioxyde de carbone dans l'atmosphère selon les besoins pour maintenir la concentration en CO₂ dans laquelle l'œuf est incubé à ladite concentration d'incubation, puis, pendant 3 jours consécutifs immédiatement après la période de 18 jours, l'incubation de l'œuf dans une atmosphère dans laquelle aucun CO₂ supplémentaire n'est introduit à partir d'une source quelconque extérieure à l'œuf ou dans laquelle du CO₂ est introduit à partir d'une source extérieure à l'œuf selon les besoins pour maintenir la concentration en CO₂ de l'atmosphère en contact avec l'œuf à une concentration qui se situe dans les 10 %, et de préférence dans les 5 %, d'une valeur de consigne comprise entre 7 500 ppm de CO₂ et 20 000 ppm de CO₂.

6. Procédé selon la revendication 4, dans lequel l'œuf de volaille fécondé non éclos est un œuf de poule.

7. Procédé selon la revendication 6, comprenant
l'exposition de l'œuf de poule fécondé non éclos pendant au moins 12 jours des 18 premiers jours de la période d'incubation à une atmosphère gazeuse qui est en contact avec l'œuf et qui contient du dioxyde de carbone à une concentration d'incubation qui se situe dans les 10 %, et de préférence dans les 5 %, d'une valeur de consigne comprise entre 7 500 ppm de CO₂ et 20 000 ppm de CO₂, et pendant la période de 18 jours, l'introduction de dioxyde de carbone dans l'atmosphère selon les besoins pour maintenir la concentration en CO₂ dans laquelle l'œuf est incubé à ladite concentration d'incubation, puis, pendant 3 jours consécutifs immédiatement après la période de 18 jours, l'incubation de l'œuf dans une atmosphère dans laquelle aucun CO₂ supplémentaire n'est introduit à partir d'une source quelconque extérieure à l'œuf ou dans laquelle du CO₂ est introduit à partir d'une source extérieure à l'œuf selon les besoins pour maintenir la concentration en CO₂ de l'atmosphère en contact avec l'œuf à une concentration qui se situe dans les 10 %, et de préférence dans les 5 %, d'une valeur de consigne comprise entre 7 500 ppm de CO₂ et 20 000 ppm de CO₂.

8. Procédé selon la revendication 6, comprenant
l'exposition de l'œuf de poule fécondé non éclos tout au long des 18 premiers jours de la période d'incubation à une atmosphère gazeuse qui est en contact avec l'œuf et qui contient du dioxyde de carbone à une concentration d'incubation qui se situe dans les 10 %, et de préférence dans les 5 %, d'une valeur de consigne comprise entre 7 500 ppm de CO₂ et 20 000 ppm de CO₂, et pendant la période de 18 jours, l'introduction de dioxyde de carbone dans l'atmosphère selon les besoins pour maintenir la concentration en CO₂ dans laquelle l'œuf est incubé à ladite concentration d'incubation, puis, pendant 3 jours consécutifs immédiatement après la période de 18 jours, l'incubation de l'œuf dans une atmosphère dans laquelle aucun CO₂ supplémentaire n'est introduit à partir d'une source quelconque extérieure à l'œuf ou dans laquelle du CO₂ est introduit à partir d'une source extérieure à l'œuf selon les besoins pour maintenir la concentration en CO₂ de l'atmosphère en contact avec l'œuf à une concentration qui se situe dans les 10 %, et de préférence dans les 5 %, d'une valeur de consigne comprise entre 7 500 ppm de CO₂ et 20 000 ppm de CO₂.

9. Procédé selon la revendication 8, dans lequel la valeur de consigne tout au long des 18 premiers jours est
constante pour l'ensemble des 18 jours.

10. Procédé selon la revendication 8, dans lequel l'œuf est incubé pendant une période de 18 jours consécutifs dans une atmosphère gazeuse qui est en contact avec l'oeuf et qui contient du dioxyde de carbone à une concentration d'incubation qui se situe dans les 5 % d'une valeur de consigne comprise entre 7 500 ppm de CO₂ et 15 000 ppm de CO₂.

11. Procédé selon la revendication 8, dans lequel l'oeuf est incubé pendant une période de 18 jours consécutifs dans une atmosphère gazeuse qui est en contact avec l'œuf et qui contient du dioxyde de carbone à une concentration d'incubation qui se situe dans les 10 % d'une valeur de consigne de 10 000 ppm de CO₂.

12. Procédé selon la revendication 8, dans lequel l'oeuf est incubé pendant une période de 18 jours consécutifs dans une atmosphère gazeuse qui est en contact avec l'oeuf et qui contient du dioxyde de carbone à une concentration d'incubation qui se situe dans les 5 % d'une valeur de consigne de 10 000 ppm de CO₂.

13. Procédé selon la revendication 8, dans lequel, pendant 3 jours consécutifs immédiatement après la période de 18 jours, l'oeuf est incubé dans une atmosphère dans laquelle du CO₂ est introduit à partir d'une source extérieure à l'œuf selon les besoins pour maintenir la concentration en CO₂ de l'atmosphère en contact avec l'oeuf à une concentration qui se situe dans les 5 % d'une valeur de consigne comprise entre 7 500 ppm de CO₂ et 15 000 ppm de CO₂.

14. Procédé selon la revendication 8, dans lequel, pendant 3 jours consécutifs immédiatement après la période de 18 jours, l'oeuf est incubé dans une atmosphère dans laquelle du CO₂ est introduit à partir d'une source extérieure à l'oeuf selon les besoins pour maintenir la concentration en CO₂ de l'atmosphère en contact avec l'oeuf à une concentration qui se situe dans les 10 % d'une valeur de consigne de 10 000 ppm de CO₂.

15. Procédé selon la revendication 8, dans lequel, pendant 3 jours consécutifs immédiatement après la période de 18 jours, l'œuf est incubé dans une atmosphère dans laquelle du CO₂ est introduit à partir d'une source extérieure à l'œuf selon les besoins pour maintenir la concentration en CO₂ de l'atmosphère en contact avec l'œuf à une concentration qui se situe dans les 5 % d'une valeur de consigne de 10 000 ppm de CO₂.
